# EUROPEAN PATENT SPECIFICATION

(11) **EP 2 423 481 B1**
(45) Date of publication and mention of the grant of the patent: **03.03.2021**
(21) Application number: 11174577.4
(22) Date of filing: 19.07.2011
(51) Int. Cl.: F01N 9/00, F02D 29/04, F02D 41/02, E02F 9/20, E02F 9/22, F01N 3/10, F02D 41/14, F01N 3/025, F01N 13/00, F02D 41/08

(54) **Exhaust gas cleaning system for engineering vehicle**
Abgasreinigungssystem für ein Baufahrzeug
Système de nettoyage de gaz d'échappement pour véhicule d'ingénierie

(30) Priority: 27.08.2010 JP 2010190215
(43) Date of publication of application: 29.02.2012
(73) Proprietor: Hitachi Construction Machinery Co., Ltd., Bunkyo-ku, Tokyo 112-8563 (JP)
(72) Inventor: Kamiya, Shohei, Ibaraki, 300-0013 (JP); Tsukada, Hidenobu, Ibaraki, 300-0013 (JP); Sato, Kensuke, Ibaraki, 300-0013 (JP)
(74) Representative: Manitz Finsterwald Patent- und Rechtsanwaltspartnerschaft mbB

(56) References cited:
- EP-A1- 2 107 230
- EP-A1- 2 208 872
- EP-A1- 2 415 981
- WO-A1-2010/107002
- JP-A- 2004 150 417

## Description

### 1. Field of the Invention

The present invention relates generally to exhaust gas cleaning systems for engineering vehicles. In particular, the invention relates to an exhaust gas cleaning system for an engineering vehicle, which allows a filter to capture particulate matter contained in exhaust gas to clean the exhaust gas and that burns and removes the particulate matter captured by the filter for cleaning the filter.

### 2. Description of the Related Art

An engineering vehicle such as hydraulic excavator or the like has a diesel engine as its drive source mounted thereon. Regulations on the discharge amount of particulate matter (hereinafter, called PM) discharged from the diesel engine have yearly been tightened along with that of NOx, CO, HC, etc. To keep up with such regulations, an exhaust gas cleaning system has been known that allows a filter called a diesel particulate filter (DPF) to capture PM to reduce the amount of the PM to be discharged to the outside. As the amount of PM captured by the filter progressively increases during the use of such a discharge gas cleaning system, the filter will be increasingly clogged. This increases the exhaust pressure of the engine to induce degradation in fuel consumption. The PM captured by the filter is appropriately burned to remove the clogging of the filter, thereby regenerating the filter.

The filter is normally regenerated by use of an oxidation catalyst. The oxidation catalyst is disposed on the upstream side of the filter or directly carried on the filter. Alternatively, the oxidation catalyst is disposed on the upstream side of the filter and is directly carried on the filter. In any of such cases, to activate the oxidation catalyst, the temperature of the exhaust gas has to be higher than the activating temperature of the oxidation catalyst. For this reason, there is a technology called forced regeneration in which the exhaust gas temperature is increased to a set temperature (a threshold value) that is higher than the activating temperature of the oxidation catalyst and is suitable for regeneration. The forced regeneration includes a technique for increasing the temperature of exhaust gas by performing sub-injection (after-injection) in which fuel is injected in an expansion stroke after direct main injection into an engine, and a technique for increasing the temperature of exhaust gas by allowing a regeneration fuel injector installed in an exhaust pipe to inject fuel into the exhaust gas flowing in the exhaust pipe.

The forced regeneration of the filter includes manual regeneration in which the regeneration is started by the operator's input and automatic regeneration in which the regeneration is automatically started. The manual regeneration is performed as below. An amount of PM deposited on a filter (a deposition amount) is first estimated. When the PM deposition amount reaches a PM deposition limit amount, a warning is given to an operator to perform the manual regeneration. Then, the operator operates a manual regeneration switch, and the regeneration is started. WO 2009/60719 discloses a technology relating to manual regeneration. On the other hand, when the PM deposition amount reaches an accumulation limit value or when a predetermined time elapses, the automatic regeneration is performed. JP-2009-79500-A discloses a technology relating to automatic regeneration. The manual regeneration and automatic regeneration are such that the PM deposition amount is generally obtained by detecting an anteroposterior differential pressure on a filter and carrying out an operation based on the detected value of such differential pressure.

Incidentally, there is a close relationship between engine output and exhaust gas temperature. For example, if the engine output lowers, the exhaust gas temperature lowers. When the exhaust gas temperature per se is low, even if forced regeneration is performed, satisfactory regeneration is not likely to be performed because of insufficiently increased temperature. To address such a problem, JP-7-166840-A proposes an exhaust gas cleaning system attached with temperature-rising assistance means.

This exhaust gas cleaning system includes a device for detecting the neutral position of a control lever. When such a neutral detecting device detects the neutral position, the exhaust gas cleaning system starts temperature-rising assistance. When the neutral detecting device detects an operation position switched from the neutral position, the exhaust gas cleaning system stops the temperature-rising assistance position. The temperature-rising assistance means adjusts the discharge pressure and discharge amount of a hydraulic pump to increase pump output and increases engine output, thereby increasing exhaust gas temperature.

As described above, the exhaust gas cleaning system in the related art starts the temperature-rising assistance on the basis of the neutral position of the control lever. Therefore, there is a problem (first) as below.

For example, when a hydraulic excavator allows a front work device to work via a control lever, its engine output is increased and also exhaust gas temperature is increased accordingly. On the other hand, when the control lever is made neutral, the engine output immediately lowers while the exhaust gas temperature does not lower immediately. The exhaust gas temperature gradually lowers. When the control lever is operated again to resume the work, the engine output is increased and also the exhaust gas temperature is again increased. In other words, whenever the control lever is temporarily made neutral during the work, the temperature-rising assistance is not necessarily always performed.

If the temperature-rising assistance is done unnecessarily, it is likely to cause melting of the filter due to the abnormal increase in the exhaust gas temperature. Further, the unnecessary temperature-rising assistance is not preferable in view of energy saving.

The exhaust gas cleaning system in the related art stops the temperature-rising assistance on the basis of the operating position of the control lever. Therefore, there is a problem (second) as below.

When the control lever is made neutral during the normal time, the engine becomes idle. Therefore, the engine output is brought to engine output PSmin (pump discharge pressure P1 and pump discharge amount Q1). When the control lever is made neutral during regeneration, to perform the temperature-rising assistance the engine output is brought to engine output PSmax (pump discharge pressure P2 (> P1) and pump discharge amount Q2 (> Q1)). Then, when the control lever is switched from the neutral position to the operating position, the engine output is regulated to the pump discharge pressure P1 and the pump discharge amount Q1, i.e., to the engine output PSmin. In this way, the temperature-rising assistance is stopped.

In this case, the discharge pressure of the pump is regulated by the switching control of a pressure control valve. In addition, the discharge amount of the pump is regulated by the tilting control of a regulator. A response time until the pressure control valve and the regulator are operated after a control command was received occurs. Specifically, the control command may be issued so that the pump discharge pressure P2 becomes the pump discharge pressure P1 and the pump discharge amount 02 becomes the pump discharge amount Q1. In such a case, they do not become P1 and Q1 immediately but the discharge pressure higher than P1 and the discharge amount greater than 01 are kept for a given length of time.

In the state where the temperature-rising assistance is not completely stopped, if slight operation work is intended to be done via a control lever, a front work device is likely to be more driven than operator's intention. Thus, operability is impaired. Further, if the work is done by the front work device, an excessive load is suddenly applied to the engine to cause abrupt lowering in the rotation number of the engine (lag-down), which significantly impairs operability.

As described above, the exhaust gas cleaning system in the related art has the problem (1) relating to the unnecessary temperature-rising assistance and the problem (2) relating to the deterioration in operability in resuming work.

EP 2107230 A1 discloses an exhaust emission purification system comprising a PTO switch for controlling a PTO device, wherein the multi-stage delay injection control is forbidden when an idle operation state of an internal combustion engine sustains for a predetermined judgment time and the PTO-device is in operation state.

EP 2208872 A1 discloses an exhaust purification system for a work vehicle equipped with a diesel engine, an exhaust gas filter and regeneration units. Regeneration is made by increasing the exhaust gas temperature.

It is the object of the invention to provide an engineering vehicle with an exhaust gas cleaning system that can avoid unnecessary temperature-rising assistance and can prevent deterioration in operability in resuming work.

This object is accomplished by the features of claim 1.

An engineering vehicle comprises the features of claim 1, amongst them an exhaust gas cleaning system, a diesel engine, a driven body driven by power of the engine, operating means for commanding the driven body to operate, and operation stopping means for stopping the operation of the driven body. The system includes: a filter device disposed in an exhaust system of the engine and including a filter for capturing particulate matter contained in exhaust gas; a regeneration device adapted to increase temperature of the exhaust gas to burn and remove particulate matter deposited on the filter; a regeneration control device adapted to control the start and stop of operation of the regeneration device; and temperature-rising assistance means for assisting temperature-rising of the regeneration device. The regeneration control device starts the operation of the temperature-rising assistance means when the operation stopping means is operated to stop the operation of the driven body during the operation of the generation device. Claim 1 recites further features.

When the operation stopping means is operated so as to stop the operation of the driven body, a period of time during which engine output lowers is long. If the engine output lowers so that also the exhaust gas temperature gradually lowers, there is a high possibility that the exhaust gas becomes lower than a threshold value (a set temperature suitable for regeneration). In other words, unnecessary temperature-rising assistance can be avoided by starting the temperature-rising assistance only as necessary.

Preferably, the exhaust gas cleaning system further includes an exhaust temperature detecting device adapted to detect temperature of the exhaust gas. The regeneration control device starts the operation of the temperature-rising assistance means when the operation stopping means is operated to stop the operation of the driven body and the exhaust temperature detecting device detects temperature lower than a threshold value during the operation of the regeneration device.

In this way, the temperature-rising assistance is started only when the exhaust gas temperature is lower than the threshold value. Therefore, the unnecessary temperature-rising assistance can further be avoided.

According to the invention, the regeneration control device stops the operation of the temperature-rising assistance means when the operation stopping means is operated to release the stop of the operation of the driven body.

A certain amount of time occurs until the operating means is operated to drive the driven body to resume the work after the operation stopping means was operated to release the stop of the operation of the driven body to enable the operation thereof. Such an amount of time is longer than a response time until the operation of the assistance means is stopped after the command of stopping the temperature-rising assistance was issued. At the time of resuming the work, the operation of the assistance means is surely stopped. In this way, deterioration in operability in resuming the work can be prevented.

Furthermore, Preferable the engineering vehicle includes a hydraulic pump driven by the engine, and the temperature-rising means regulates at least one of the discharge pressure and discharge amount of the hydraulic pump and applies a hydraulic load to the engine.

The operation stopping means is a gate lock lever selectively operated between a first position where the operation of the driven body is enabled and a second position where the operation of the driven body is disabled.

The operation of the driven body (e.g. a front work device or a traveling system) can be stopped by operating the operation stopping means which is the gate lock lever.

An exhaust gas cleaning system is provided that can avoid unnecessary temperature-rising assistance and can prevent deterioration in operability in resuming work, in an engineering vehicle such as a hydraulic excavator or the like.

During automatic regeneration, the gate lock lever 5 may be in a locked state and work may be not performed (second position B). In such a case, when exhaust gas temperature detected by the exhaust temperature detecting device 37 is lower than the threshold value, temperature-rising assistance is started. The minimum engine output PS1 (pump discharge pressure P1 and pump discharge amount Q1) is brought to engine output PS2 (pump discharge pressure P2 and pump discharge amount Q2). In this way, a hydraulic load is applied to an engine to thereby increase exhaust gas temperature. In a case where the work is resumed during the regeneration, when an operator pulls down the gate lock lever 5 to the first position A, the engine output PS2 is returned to the minimum engine output PS1 (pump discharge pressure P1 and pump discharge amount Q1). Thus, the temperature-rising assistance is stopped. Even if the temperature-rising assistance is stopped, the automatic regeneration is continued.

The present invention can avoid the unnecessary temperature-rising assistance and prevent the degradation in operability in resuming the work.

### BRIEF DESCRIPTION OF THE DRAWINGS

Fig. 1 illustrates the entire constitution of an exhaust gas cleaning system (a first embodiment).
Fig. 2 illustrates a hydraulic drive system mounted on a hydraulic excavator.
Fig. 3 illustrates external appearance of the hydraulic excavator.
Fig. 4 illustrates a functional block diagram of a controller.
Fig. 5 is a flowchart illustrating processing contents of temperature-rising assistance control.
Fig. 6 illustrates the relationship between the discharge pressure and discharge amount of a hydraulic pump and the output power of an engine.
Fig. 7 illustrates exhaust gas temperature with time by way of example.
Fig. 8 illustrates the entire constitution of the exhaust gas cleaning system (a modified example).

### DESCRIPTION OF THE PREFERRED EMBODIMENTS

### <First Embodiment>

### -Constitution-

A first embodiment of the present invention will hereinafter be described with reference to the drawings.

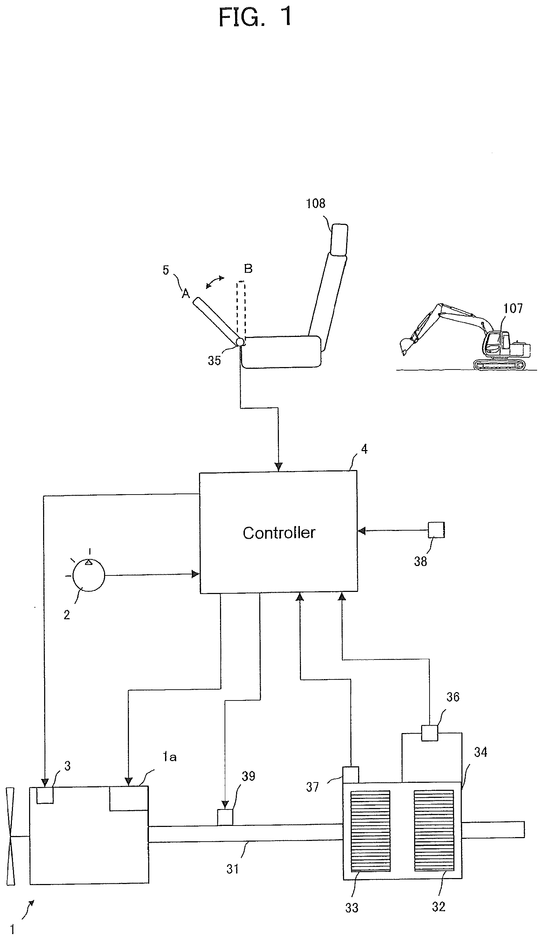

Fig. 1 illustrates the entire constitution of an exhaust gas cleaning system for an engineering vehicle according to the first embodiment of the invention. Referring to Fig. 1, a diesel engine 1 is mounted on the engineering vehicle (e.g. a hydraulic excavator). The engine 1 is provided with an electronic governor 1a which is an electronic fuel injection control unit. The target rotation number of the engine 1 is commanded with an engine control dial 2 and the actual rotation number of the engine 1 is detected by a rotation number detecting device 3. The instruction signal of the engine control dial 2 and the detected signal of the rotation number detecting device 3 are received by a controller 4. The controller 4 controls the electronic governor 1a on the basis of the command signal (the target rotation number) and the detected signal (the actual rotation number), thereby controlling the rotation number and torque of the engine 1.

The hydraulic excavator is provided with a gate lock lever 5 on the left front side of a cab seat 108. The gate lock lever 5 can be selectively operated between a first position A which is a lowered position to limit an entrance to the cab seat 108 and a second position B which is a raised position to open the entrance to the cab seat 108.

The exhaust gas cleaning system is disposed on an exhaust pipe 31 constituting part of an exhaust system of the engine 1. The exhaust gas cleaning system includes: a DPF device 34 including a filter 32 collecting particulate matter contained in exhaust gas and oxidation catalyst 33 disposed on the upstream side of the filter 32; a position detecting device 35 detecting the operating position of the gate lock lever 5; and a differential pressure detecting device 36 detecting anteroposterior differential pressure (a pressure loss of the filter 32) between the upstream side and downstream side of the filter 32. The cleaning system further includes an exhaust temperature detecting device 37 installed on the upstream side of the filter to detect the temperature of exhaust gas; a regeneration switch 38 instructing manual regeneration; and a regeneration fuel injection device 39 installed on the exhaust pipe 31 between the engine 1 and the DPF device 34. The oxidation catalyst 33 and the regeneration fuel injection device 39 constitute a regeneration unit which burns and removes the PM (particulate matter) deposited on the filter 32 for regenerating the filter 32.

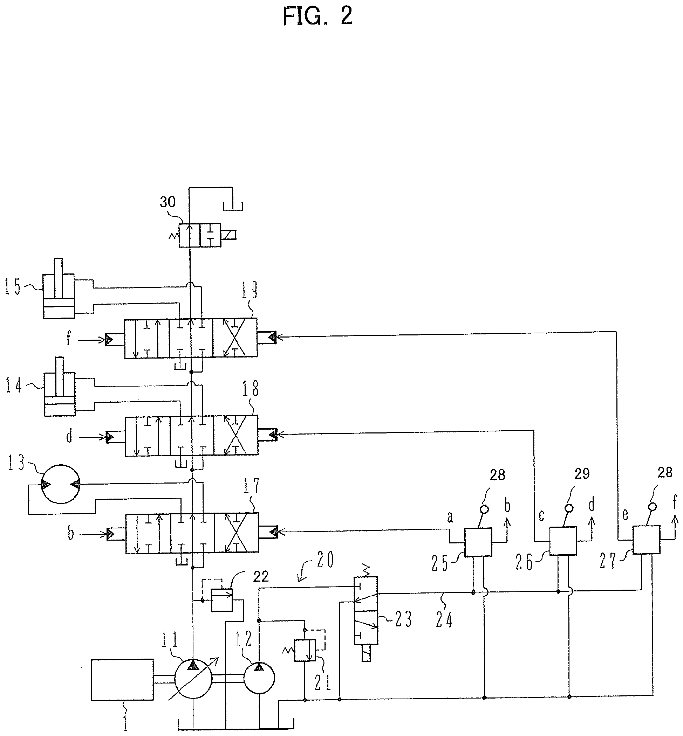

Fig 2 illustrates the hydraulic drive system mounted on the engineering vehicle (e.g. a hydraulic excavator). The hydraulic drive system includes: a variable displacement main hydraulic pump 11 and a fixed displacement pilot pump 12 which are driven by the engine 1; a plurality of actuators including a hydraulic motor 13 and hydraulic cylinders 14 and 15, the motor 13 and the cylinders 14 and 15 being driven by the hydraulic fluid discharged from the hydraulic pump 11; and a plurality of flow control valves including pilot-operated flow control valves 17 to 19 which control the flow (a flow rate and a direction) of the hydraulic fluid supplied from the hydraulic pump 11 to the hydraulic motor 13 and hydraulic cylinders 14 and 15. The hydraulic drive system further includes a pilot relief valve 21 which regulates the pressure of the hydraulic fluid discharged from the pilot pump 12 and forms a pilot hydraulic source 20; a main relief valve 22 which sets the upper limit of the discharge pressure of the main hydraulic pump 11; a control valve 30 installed on the downstream side of a center bypass line connecting the flow control valves 17 to 19 in series. The hydraulic drive system further includes a solenoid selector valve 23 connected to the downstream side of the pilot hydraulic source 20 and on/off controlled depending on the opening/closing state of the gate lock lever 5 installed at the cab seat entrance of the hydraulic excavator; and remote control valves 25, 26 and 27. The remote control valves are connected to a pilot fluid passage 24 on the downstream side of the solenoid selector valve 23 and produces control pilot pressures a, b; c, d; e and f, respectively, adapted to operate the flow control valves 17 to 19 using the hydraulic pressure of the pilot hydraulic source 20 as original pressure.

The remote control valves 25, 26 and 27 are operated by the corresponding left and right control levers 28 and 29 installed on the left and right of the cab seat 108.

The control levers 28 and 29 can each be operated in a cross shape direction. When the control lever 28 is operated in a one direction of the cross shape, the remote valve 25 is operated. When the control lever 28 is operated in the other direction of the cross shape, the remote control valve 27 is operated. When the control lever 29 is operated in a one direction of the cross shape, the remote control valve 26 is operated. When the control lever 29 is operated in the other direction of the cross shape, a remote control valve not illustrated is operated. In the case where the control lever 28 is operated in the one direction of the cross shape, when it is operated from the neutral direction in the one direction, the remote control valve produces control pilot pressure "a" and when the control lever 28 is operated from a neutral position in the opposite direction, the remote control valve 25 produces control pilot pressure "b". The control pilot pressures "a" and "b" are led via pilot lines 25a and 25b to the corresponding pressure-receiving portions of the flow control valve 17, whereby the flow control valve 17 is switched from the neutral position.

Similarly, in the case where the control lever 28 is operated in the other direction of the cross shape, when it is operated in the one direction from the neutral position, the remote control valve 27 produces control pilot pressure "e", and when the control lever 28 is operated in the opposite direction from the neutral direction, the remote control valve 27 produces control pilot pressure "f". The control pilot pressures "e" and "f" are led via pilot lines 27a and 27b to the corresponding pressure-receiving portions of the flow control valve 19, whereby the flow control valve 19 is switched from the neutral position. In the case where the control lever 29 is operated in the one direction of the cross shape, when it is operated from the neutral position in the one direction, control pilot pressure "c" is produced, and when the flow control lever is operated from the neutral direction in the opposite direction, control pilot pressure "d" is produced. The control pilot pressures "c" and "d" are led via pilot control lines 26a and 26b, respectively, to the respective pressure-receiving portions of the flow control valve 18, whereby the flow control valve 18 is switched from the neutral position.

The control pilot pressures a to f are subjected to communication or shutoff depending on the position of the gate lock lever 5.

When the gate lock lever 5 is at the first position A, the solenoid of the solenoid selector valve 23 is energized to switch the solenoid control valve 23 from the position illustrated in the figure. In this way, the pressure of the pilot hydraulic source 20 is led to the remote control valves 25, 26 and 27, which makes it possible to allow the remote control valves 25, 26 and 27 to operate the corresponding flow control valves 17, 18 and 19. When the gate lock lever 5 is operatively raised to the second position B, the solenoid of the solenoid selector valve 23 is de-energized to switch the position illustrated in the figure, thereby blocking the communication between the pilot hydraulic source 20 and the remote control valves 25, 26 and 27. This makes it impossible for the remote control valves 25, 26 and 27 to operate the corresponding flow control valves 17, 18 and 19. In short, when the gate lock lever 5 is operatively raised to the second position B, the remote control valves 25, 26 and 27 (control lever units) are brought into a locked state. When the gate lock lever 5 is operatively lowered to the first position A again, the remote control levers 25, 26 and 27 are brought into an unlocked state. The switching of the position of the solenoid valve 23 by the gate lock lever 5 is done as below. For example, a switch not illustrated in the figure is installed between the solenoid of the solenoid selector valve 23 and the power supply. When the gate lock lever 5 is at the first position A, such a switch is turned on (closed) to energize the solenoid. When the gate lock lever 5 is operated to be at the second position B, the switch is turned off (opened) to de-energize the solenoid.

The control valve 30 is a two-position selector valve having an open position and a close position. When the solenoid is not energized, the control valve 30 is at the open position. When the solenoid is energized, the control vale 30 is switched from the open position illustrated from the close position.

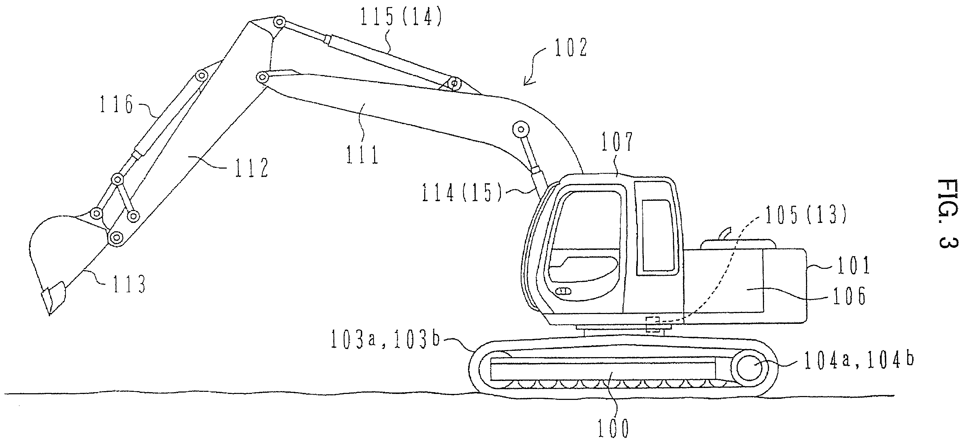

Fig. 3 illustrates external appearance of the hydraulic excavator. The hydraulic excavator includes a lower travel structure 100, an upper turning body 101, and a front work device 102. The lower travel structure 100 has left and right crawler type travelling devices 103a and 103b which are driven by left and right travelling devices 104a and 104b, respectively. The upper turning body 101 is mounted on the lower travel structure 100 so as to be turnable by a turning motor 105. The front work device 102 is mounted onto the front portion of the upper turning body 101 so as to be able to be laid and raised. The upper turning body 101 is provided with an engine room 106 and a cabin 107. An engine 1 is disposed in the engine room 106. The gate lock lever 5 (Fig. 1) is installed at the entrance to the cab seat 108 in the cabin 107. The control lever units (not illustrated) incorporating the corresponding remote control levers 25, 26 and 27 are disposed on the left and right of the cab seat 108.

The front work device 102 is of an articulated structure having a boom 111, an arm 112 and a bucket 113. The boom 111 is turned vertically by the extension and contraction of a boom cylinder 114. The arm 112 is turned upward and downward, and forward and rearward by the extension and contraction of an arm cylinder 115. The bucket 113 is turned upward and downward, and forward and rearward by the extension and contraction of a bucket cylinder 116.

In Fig. 2, the hydraulic motor 13 corresponds to e.g. the turning motor 105. The hydraulic cylinder 14 corresponds to e.g. the arm cylinder 115. The hydraulic cylinder 15 corresponds to e.g. the boom cylinder 114. The hydraulic drive device illustrated in Fig. 2 is provided with other hydraulic actuators and control valves corresponding to the traveling motors 104a, 104b and the bucket cylinder 116, etc. However, their illustrations are omitted.

### -Control-

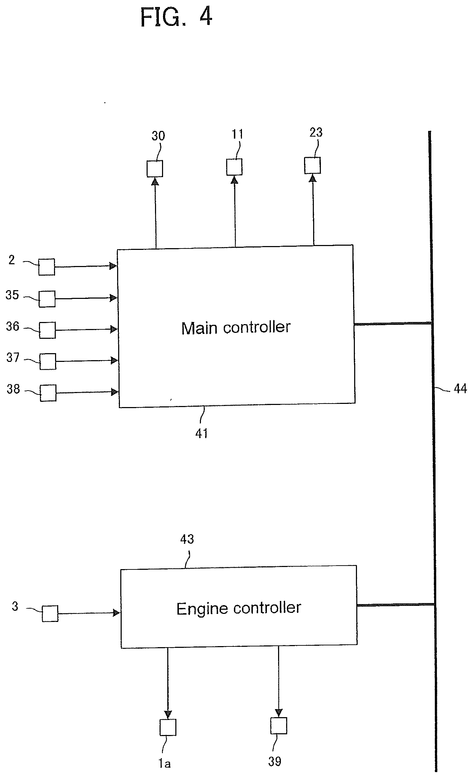

Fig. 4 illustrates a functional block of the controller 4. The controller 4 includes a main controller 41 and an engine controller 43, which are connected with each other via a communication line 44 to form a vehicle-body network. The main controller 41 is adapted to receive the command signal of the engine control dial 2, the detection signals of a position detecting device 35, of a differential pressure detecting device 36 and of an exhaust temperature detecting device 37. The engine controller 43 is adapted to receive the detection signal of a rotation number detecting device 3.

The engine controller 43 receives the command signal of the engine control dial 2 via the communication line 44 and controls the rotation number and torque of the engine 1 on the basis of the command signal and the detected signal of the rotation number detecting device 3.

The main controller 41 controls the vehicle body in general such as the hydraulic drive device, etc. For example, the main controller 41 controls the discharge pressure and discharge amount of the hydraulic pump 11 by controlling the control valve 30 and the regulator of the hydraulic pump 11. Regeneration control and temperature-rising assistance control are each one function of the main controller 41.

The main controller 41 receives the detected signal of the differential pressure detecting device 36, estimates a PM deposition amount, and executes arithmetic processing on regeneration control on the basis of the estimated PM deposition amount. The main controller 41 then sends a control signal corresponding to the calculation result to the engine controller 43 via the communication line 44. In response to the control signal, the engine controller 43 controls the electronic governor 1a and the regeneration fuel injection device 39 (automatic regeneration control). The main controller 41 receives an instruction signal of the regeneration switch 38 and executes the arithmetic processing on the regeneration control (manual regeneration control).

A description is given of the temperature-rising assistance control by the main controller 41. The main controller 41 receives the detected signals of the position detecting device 35 and of the exhaust temperature detecting device 37 and executes arithmetic processing on the temperature-rising assistance control on the basis of the detected signals. The main controller 41 sends the control signals corresponding to the calculation results to the control valve 30 and the regulator of the hydraulic pump 11 to control the discharge pressure and discharge amount of the hydraulic pump 11. In this way, the load on the engine 1 driving the hydraulic pump 11 is increased to increase the exhaust gas temperature of the engine 1.

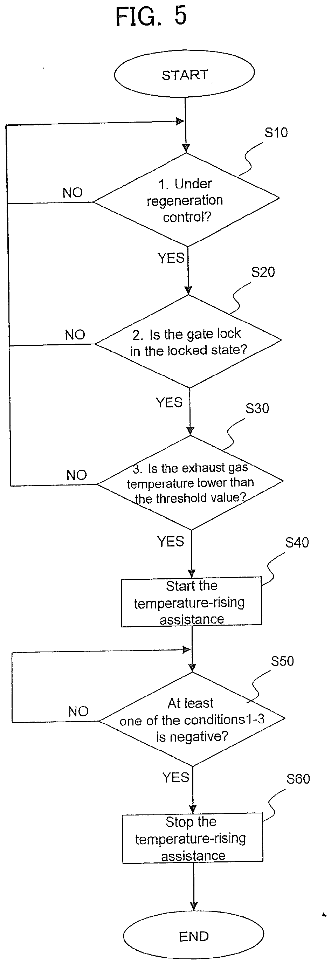

Fig. 5 is a flowchart illustrating the processing contents of the temperature-rising assistance control by the main controller 41.

The main controller 41 first determines whether or not the main controller 41 per se is executing the regeneration control (step S10). When determining that the regeneration control is being done, the main controller 41 determines whether or not the gate lock lever 5 is operatively raised to the second position B on the basis of the detected signal of the position detecting device 35. In other words, the main controller 41 determines whether or not the gate lock lever 5 is in the locked state (second position B) where the control pilot pressure is blocked (step S20). When determining that the gate lock lever 5 is in the locked state, the main controller 41 determines whether or not the exhaust gas temperature is lower than a threshold value (a set value suitable for regeneration) on the basis of the detected signal of the exhaust temperature detecting device 37 (step S30). When determining that the exhaust gas temperature is lower than the threshold value, the main controller 41 controls the discharge pressure and discharge amount of the hydraulic pump 11 and applies a hydraulic load to the engine 1, thus starting the temperature-rising assistance (step S40).

In step S10, the main controller 41 may determine that it does not exercise the regeneration control. In step S20, the gate lock lever 5 may not be in the locked state (is at the first position A). In step S30, the exhaust gas temperature may not be lower than the threshold value (the temperature suitable for the regeneration). In any of such cases, the processing is returned to the procedure immediately after the start and the procedures of steps S10, S20 and S30 are repeated.

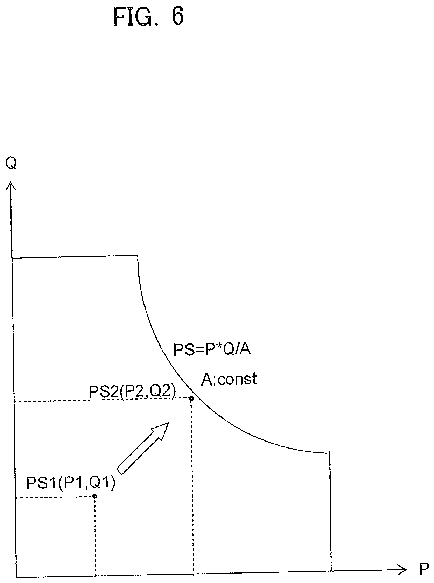

The start of temperature-rising assistance in step S40 is performed as below for example. Fig. 6 illustrates the relationship between the discharge pressure and discharge amount of the hydraulic pump 11 and the output power of the engine 1. When, during normal times, the gate lock lever 5 is in the locked state and work is not done, the discharge pressure and discharge amount of the hydraulic pump 11 are controlled to pump discharge pressure P1 and pump discharge amount Q1, respectively, in view of energy saving to provide minimum engine output PS1. When the temperature-rising assistance command is issued, the discharge pressure and discharge amount of the hydraulic pump 11 are controlled to pump discharge pressure P2 (> P1) and pump discharge amount Q2 (> Q1), respectively. The engine 1 is allowed to have engine output PS2 for driving the hydraulic pump 11, that is, the load on the engine 1 is increased, thereby increasing the exhaust gas temperature of the engine 1.

After the start of temperature-rising assistance, determination is made as to whether or not at least one of the determination in step 10 (condition 1), the determination in step 20 (condition 2) and the determination in step 30 is negative (at least one of the conditions 1 to 3 is not satisfied) (step 50). When it is determined that any one is negative, the temperature-rising assistance is stopped (step S60).

The stop of the temperature-rising assistance in step S60 is carried out by controlling the pump discharge pressure and pump flow rate to the pump discharge pressure P1 and pump discharge amount Q1, respectively, to provide the minimum engine output PS1. The load on the engine 1 is reduced to lower the exhaust gas temperature of the engine 1.

When it is determined that all of conditions 1 to 3 is affirmative (all of the conditions 1 to 3 is satisfied. In other word, none of the conditions 1 to 3 is negative.) in step S50, the procedure of step 50 is repeated to continue the temperature-rising assistance.

### -Operation-

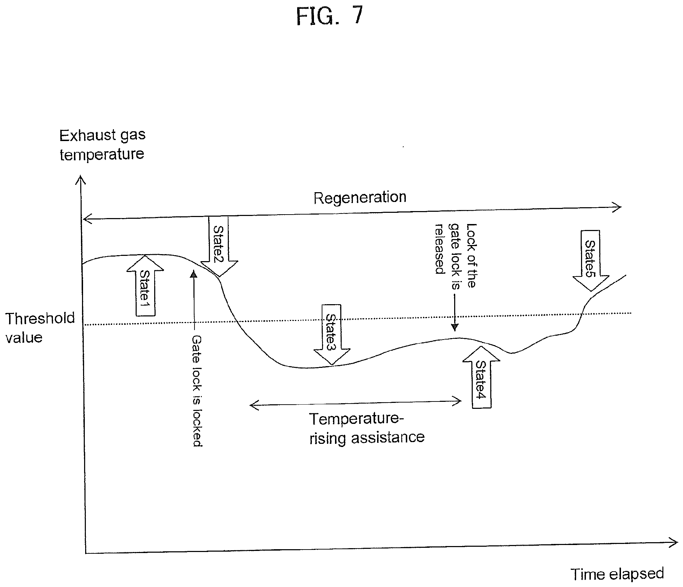

A description is given of the operation of the exhaust gas cleaning system according to the first embodiment. Fig. 7 illustrates an example in exhaust gas temperature with time for assisting understanding.

When the engineering vehicle (the hydraulic excavator) finishes work, an operator operatively raises the gate lock lever 5 from the first position A to the second position B to bring it into the locked state. In this case, when the PM deposition amount reaches an accumulation limit value, automatic regeneration is started. There is also a case where, since the automatic regeneration is started during work, an operator interrupts the work and brings the gate lock lever 5 into the locked state.

In general, exhaust gas temperature immediately after work or during work is higher than the activating temperature of the oxidation catalyst 33. When the regeneration fuel injection device 39 is controlled to inject fuel into the exhaust pipe 31, unburned fuel is supplied to and oxidized by the oxidation catalyst 33 to provide reaction heat. Such reaction heat further increases the exhaust gas temperature to burn and remove the PM deposited on the filter 32.

In this case, the exhaust gas temperature detected by the exhaust temperature detecting device 37 is equal to or higher than a threshold value. Therefore, the temperature-rising assistance is not performed (step S10 → S20 → S30 → S10) (the state 1 in Fig. 7).

The gate lock lever 5 is usually in the locked state. When work is not performed, the discharge pressure and discharge amount of the hydraulic pump are controlled to the pump discharge pressure P1 and the pump discharge amount Q1, respectively, in view of energy saving to provide the minimum engine output PS1. If the engine output is lowered, also the exhaust gas temperature lowers gradually and becomes lower than the threshold value. In this case, even if the forced regeneration is performed, there is a possibility that the exhaust gas temperature may not sufficiently be increased (state 2 in Fig. 7).

Therefore, when the exhaust gas temperature detected by the exhaust gas temperature device 37 is lower than the threshold value, the temperature-rising assistance is started (step S10 → S20 → S30 → S40). The discharge pressure and discharge amount of the hydraulic pump are controlled to the pump discharge pressure P2 and the pump discharge amount Q2, respectively, to provide engine output PS2, which increases exhaust gas temperature (state 3 in Fig. 7).

After the start of the temperature-rinsing assistance, when the exhaust gas temperature is equal to or higher than the threshold value by the temperature-rising assistance or when the automatic regeneration is finished by burning and removing the PM, the temperature-rising assistance is stopped (Step S40 → S50 → S60).

On the other hand, in a case where work is resumed during the regeneration, when the operator operatively pulls down the gate lock lover 5 to the first position A, the temperature-rising assistance is stopped (Step S40 → S50 → S60) (state 4 in Fig. 7).

Incidentally, even if the temperature-rising assistance is stopped by operatively pulling down the gate lock lever 5, automatic regeneration is continued. If the operator operatively pulls down the gate lock lever 5 to the first position A and resumes the work, the engine output is increased so that the exhaust gas temperature is equal to or higher than the threshold value. Thus, satisfactory regeneration is performed (state 5 in Fig. 7).

### -Advantages-

A description is given of the effects of the exhaust gas cleaning system according to the first embodiment.
(a) The exhaust gas cleaning system in the related art starts the temperature-rising assistance on the basis of the neutral position of each of the control levers 28 and 29. When the control levers 28 and 29 are made neutral, the engine output is lowered. However, if the control levers 28 and 29 are operated again to resume the work, the engine work is increased again so that it is not likely that the exhaust gas temperature becomes lower than the threshold value. In other words, if the period of time during which the engine output is lowered is short, it is not necessary to perform the temperature-rising assistance. On the other hand, if the temperature-rising assistance is performed needlessly, there is a possibility that the filter is damaged by melting due to abnormally increased temperature. In addition, such needless temperature-rising assistance is not preferable also in view of energy saving.
   The exhaust gas cleaning system according to the present embodiment starts the temperature-rising assistance on the basis of the operating position (the second position B) of the gate lock lever 5. When operatively raising the gate lock lever 5 to the second position B, the operator often gets away from the hydraulic excavator for a rest. Therefore, the period of time during which the engine output is lowered is long. If the engine output is lowered, also the exhaust gas temperature gradually lowers and is more likely to become lower than the threshold value. In short, the exhaust gas cleaning system according to the present embodiment starts the temperature-rising assistance only when required. Thus, the unnecessary temperature-rising assistance can be avoided.
(b) If the engine output is lowered, the exhaust gas temperature gradually lowers; however, it will not lower immediately. If the exhaust gas temperature is equal to or higher than the threshold value, the temperature-rising assistance is not necessary. The exhaust gas cleaning system according to the present embodiment is provided with the exhaust temperature detecting device 37. When the exhaust gas temperature detected by the exhaust temperature detecting device 37 is equal to or higher than the threshold value, the temperature-rising assistance is not performed. Thus, the unnecessary temperature-rising assistance can further be avoided.
(c) The exhaust gas cleaning system in the related art has the following same operation with the exhaust gas cleaning system according to the present embodiment. Both the systems control the discharge pressure and discharge amount of the hydraulic pump 11 and increase the engine output PS1 (the pump discharge pressure P1 and the pump discharge amount Q1) to the engine output PS2 (the pump discharge pressure P2 and the pump discharge amount Q2). In this way, the systems start the temperature-rising assistance and return the engine output PS2 to the engine output PS1 (the pump discharge pressure P1 and the pump discharge amount Q1) and stop the temperature-rising assistance.

In this case, the discharge pressure of the pump 11 is regulated by the switching control of the control valve 30. In addition, the discharge amount of the pump 11 is regulated by the tilting control of the regulator. Response time occurs until the control valve 30 and the regulator of the pump 11 are operated after a control command was inputted. In other words, even if the control order is issued so that P2 and Q2 become P1 and Q1, respectively, P2 and Q2 do not immediately become P1 and Q1, respectively. Therefore, discharge pressure higher than P1 and a discharge amount greater than Q1 are kept for a given length of time.

The exhaust gas cleaning system in the related art commands the stop of the temperature-rising assistance on the basis of the operating positions of the control levers 28 and 29. There is no time until the work is resumed by the control levers 28 and 29 after the temperature-rising assistance was stopped by the control levers 28 and 29. Therefore, if the work is resumed in this state, operability is likely to deteriorate.

The exhaust gas cleaning system in the present embodiment commands the stop of the temperature-rising assistance on the basis of the operating position (the first position A) of the gate lock lever 5. An interval of time from the command of stopping the temperature-rising assistance to the resuming of the work by the operative levers 28 and 29, i.e., an interval of time until the operator operates the control levers 28 and 29 after the operator operatively pulls down the gate lock lever 5 to enable the operation of the hydraulic excavator, is longer than the response time of the control valve 30 and of the regulator of the pump 11. Therefore, the engine output is returned to the engine output PS1 (the pump discharge pressure P1, pump discharge amount Q1) at the time of resuming the work. Thus, it is possible to prevent operability from deteriorating at the time of resuming the work.

### -Modified Embodiment-

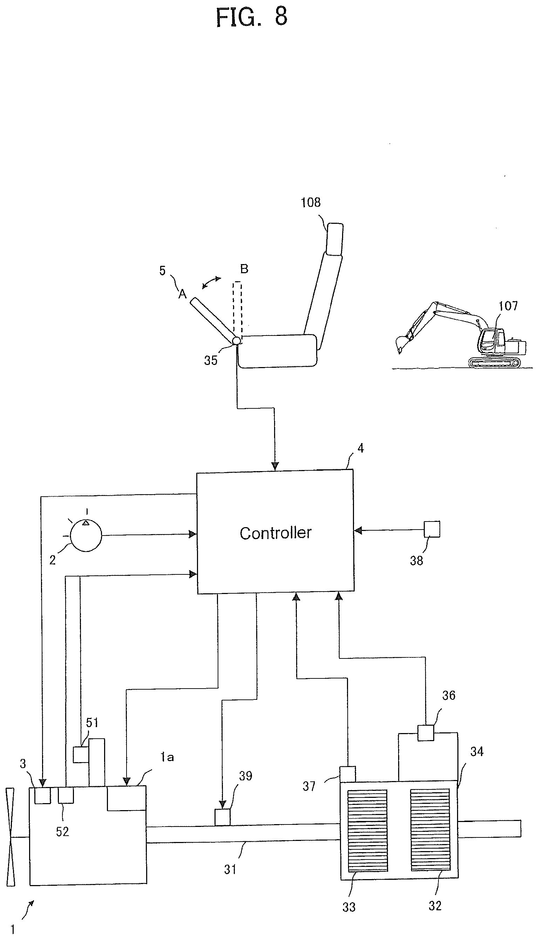

The embodiment of the present invention has been described thus far. However, the present invention is not limited to this. The invention can be modified in various ways. The following recites such modifications.
1. In the operation of the present embodiment, the PM deposition amount is obtained by detecting the anteroposterior differential pressure on the filter by the differential pressure detecting device 36 and by performing a calculation based on the detected value of the differential pressure. However, the PM deposition amount may be obtained as below. The engine 1 is provided with an air-quantity detecting device 51 which detects a quantity of air flowing into the engine and with a boost pressure detecting device 52 which detects the pressure of air flowing into the engine. The quantity and pressure of the air flowing into the engine are detected by such devices and a calculation is performed based on the detected values. Fig. 8 illustrates the entire constitution of the exhaust gas cleaning system for an engineering vehicle according to this modified example.
2. In the operation of the present embodiment, as illustrated in the functional block diagram (Fig. 4) of the controller 4, the control valve 30 and the regulator of the hydraulic pump 11 directly receive the command signals outputted from the controller 4 and are controlled based on the command signals. However, another constitution as below may be possible. Solenoid valves are installed. The controller 4 sends command signals to these solenoid valves. The solenoid valves are each switched based on the command signals and produce control pilot pressure taking the hydraulic pressure of the pilot hydraulic source 20 as source pressure. The control valve 30 and the regulator of the hydraulic pump 11 are each controlled based this control pilot pressure.

## Claims

1. An engineering vehicle comprising a diesel engine (1), a hydraulic pump (11) driven by the engine (1), a driven body (100, 101, 102) driven by a hydraulic fluid discharged from the hydraulic pump (11), operating means (4) for commanding the driven body (100, 101, 102) to operate, operation stopping means (5) for disabling the operation of the driven body (100, 101, 102) even when the operating means (4) are operated, a filter device (34) disposed in an exhaust pipe (31) of the engine (1) and including a filter (32) for capturing particulate matter contained in exhaust gas, and a regeneration device (33, 39) adapted to increase temperature of the exhaust gas to burn and remove particulate matter by injecting fuel into the exhaust pipe (31), **characterised by** further comprising a regeneration control device (41) adapted to control the automatic start of operation of the regeneration device when an estimated particulate matter deposition amount reaches a limit value and stop of operation of the regeneration device when the estimated particulate matter deposition amount reaches a permissible value, wherein
the operation stopping means (5) is a gate lock lever (5) selectively operated between a first position (A) to limit an entrance to a cab seat (108) and a second position (B) to open the entrance to the cab seat (108) and configured such that, when the gate lock lever (5) is at the first position (A), the operation of the driven body (100, 101, 102) by the operating means (4) is enabled and, when the gate lock lever (5) is operated from the first position (A) to the second position (B), the operation of the driven body (100, 101, 102) by the operating means (4) is disabled, the engineering vehicle further comprising temperature-rising assistance means (30, S40) for assisting temperature-rising of the regeneration device (33, 39) by regulating at least one of the discharge pressure and discharge amount of the hydraulic pump (11) and applying a hydraulic load to the engine (1), and
the regeneration control device (41) is adapted to start the operation of the temperature-rising assistance means (30, S40) when the gate lock lever (5) is at the second position (B) during the operation of the regeneration device (33, 39), and is adapted to stop the operation of the temperature-rising assistance means (30, S40) when the gate lock lever (5) is in the first position (A) while continuing operation of the regeneration device (33, 39).

2. The engineering vehicle according to claim 1, further comprising:
an exhaust temperature detecting device (37) adapted to detect temperature of the exhaust gas;
wherein the regeneration control device (41) is adapted to start the operation of the temperature-rising assistance means (30, S40) when the gate lock lever (5) is at the second position (B) and the exhaust temperature detecting device (37) detects temperature lower than a threshold value during the operation of the regeneration device (33, 39).

## Patentansprüche

1. Baufahrzeug, umfassend einen Dieselmotor (1), eine vom Motor (1) angetriebene Hydraulikpumpe (11), einen angetriebenen Körper (100, 101, 102), der von einer von der Hydraulikpumpe (11) abgegebenes Hydraulikfluid angetrieben wird, ein Betriebsmittel (4), um den angetriebenen Körper (100, 101, 102) zum Betrieb anzuweisen, ein Betriebsstoppmittel (5) zum Deaktivieren des Betriebs des angetriebenen Körpers (100, 101, 102), selbst wenn das Betriebsmittel (4) betätigt ist, eine Filtervorrichtung (34), die in einem Abgasrohr (31) des Motors (1) angeordnet ist und einen Filter (32) zum Abfangen von im Abgas enthaltenem Partikelmaterial enthält, eine Regenerationsvorrichtung (33, 39), die zur Erhöhung der Temperatur des Abgases angepasst ist, um Partikelmaterial durch Injektion von Kraftstoff in das Abgasrohr (31) zu verbrennen und zu entfernen; **dadurch gekennzeichnet, dass** ferner eine Regenerationssteuervorrichtung (41) enthalten ist, die angepasst ist, um den automatischen Betriebsstart der Regenerationsvorrichtung, wenn eine geschätzte Partikelmaterialablagerungsmenge einen Grenzwert erreicht, und einen Betriebsstopp der Regenerationsvorrichtung zu steuern, wenn die geschätzte Partikelmaterialablagerungsmenge einen zulässigen Wert erreicht,
wobei das Betriebsstoppmittel (5) ein Türverriegelungshebel (5) ist, der selektiv zwischen einer ersten Position (A) zum Begrenzen eines Zugangs zu einem Kabinensitz (108) und einer zweiten Position (B) zum Öffnen des Eingangs zum Kabinensitz (108) betätigt wird und so konfiguriert ist, dass, wenn sich der Türverriegelungshebel (5) in der ersten Position (A) befindet, der Betrieb des angetriebenen Körpers (100, 101, 102) durch das Betriebsmittel (4) aktiviert wird, und wenn der Türverriegelungshebel (5) von der ersten Position (A) in die zweite Position (B) betätigt wird, der Betrieb des angetriebenen Körpers (100, 101, 102) durch das Betriebsmittel (4) deaktiviert wird,
wobei das Baufahrzeug ferner ein Temperaturanstiegsunterstützungsmittel (30, S40) zum Unterstützen eines Temperaturanstiegs der Regenerationsvorrichtung (33, 39) durch Regulieren mindestens eines des Auslassdrucks und der Auslassmenge der Hydraulikpumpe (11) und zum Aufbringen einer Hydrauliklast auf den Motor (1) umfasst und
die Regenerationssteuervorrichtung (41) dazu ausgelegt ist, den Betrieb des Temperaturanstiegsunterstützungsmittels (30, S40) zu starten, wenn sich der Türverriegelungshebel (5) während des Betriebs der Regenerationsvorrichtung (33, 39) in der zweiten Position (B) befindet, und dazu ausgelegt ist, den Betrieb des Temperaturanstiegsunterstützungsmittels (30, S40) zu stoppen, wenn sich der Türverriegelungshebel (5) in der ersten Position (A) befindet, während der Betrieb der Regenerationsvorrichtung (33, 39) fortgesetzt wird.

2. Baufahrzeug nach Anspruch 1, ferner umfassend:
eine Abgastemperaturerfassungsvorrichtung (37), die angepasst ist, um eine Temperatur des Abgases zu erfassen;
wobei die Regenerationssteuervorrichtung (41) angepasst ist, um den Betrieb des Temperaturanstiegsunterstützungsmittels (30, S40) zu starten, wenn sich der Türverriegelungshebel (5) in der zweiten Position (B) befindet und die Abgastemperaturerfassungsvorrichtung (37) erfasst, dass während des Betriebs der Regenerationsvorrichtung (33, 39) eine Temperatur unter einem Schwellenwert liegt.

## Revendications

1. Véhicule de chantier comprenant un moteur diesel (1), une pompe hydraulique (11) entraînée par le moteur (1), un corps entraîné (100, 101, 102) entraîné par un fluide hydraulique refoulé par la pompe hydraulique (11), un moyen de fonctionnement (4) destiné à ordonner au corps entraîné (100, 101, 102) de fonctionner, un moyen d'arrêt de fonctionnement (5) destiné à bloquer le fonctionnement du corps entraîné (100, 101, 102) même si le moyen de fonctionnement (4) fonctionne, un dispositif de filtrage (34) disposé dans un tube d'échappement (31) du moteur (1) et incluant un filtre (32) destiné à capturer des matières particulaires contenues dans des gaz d'échappement, et un dispositif de régénération (33, 39) adapté pour augmenter une température des gaz d'échappement pour brûler et supprimer des matières particulaires en injectant du combustible dans le tube d'échappement (31),
**caractérisé en ce qu'**il comprend en outre :
un dispositif de commande de régénération (41) adapté pour commander le démarrage automatique du fonctionnement du dispositif de régénération quand une quantité estimée de dépôt de matières particulaires atteint une valeur limite, et pour arrêter le fonctionnement du dispositif de régénération quand la quantité estimée de dépôt de matières particulaires atteint une valeur permissible, dans lequel
le moyen d'arrêt de fonctionnement (5) est un levier de verrouillage de porte (5) mis en fonctionnement sélectivement entre une première position (A) pour limiter une entrée à un siège de cabine (108) et une seconde position (B) pour ouvrir l'entrée au siège de cabine (108), et configuré de sorte que, quand le levier de verrouillage de porte (5) est à la première position (A), le fonctionnement du corps entraîné (100, 101, 102) via le moyen de fonctionnement (4) est autorisé, et, quand le levier de verrouillage de porte (5) est mis en fonctionnement depuis la première position (A) vers la seconde position (B), le fonctionnement du corps entraîné (100, 101, 102) via le moyen de fonctionnement (4) est bloqué,
le véhicule de chantier comprenant en outre un moyen d'assistance d'augmentation de température (30, S40) destiné à assister une augmentation de température du dispositif de régénération (33, 39) en réglant au moins un paramètre parmi la pression de refoulement et la quantité de refoulement de la pompe hydraulique (11), et en appliquant une charge hydraulique au moteur (1), et
le dispositif de commande de régénération (41) est adapté pour démarrer le fonctionnement du moyen d'assistance d'augmentation de température (30, S40) quand le levier de verrouillage de porte (5) est à la seconde position (B) pendant le fonctionnement du dispositif de régénération (33, 39), et est adapté pour arrêter le fonctionnement du dispositif d'assistance d'augmentation de température (30, S40) quand le levier de verrouillage de porte (5) est dans la première position (A) pendant que le dispositif de régénération (33, 39) continue à fonctionner.

2. Véhicule de chantier selon la revendication 1, comprenant en outre :
un dispositif de détection de température d'échappement (37) adapté pour détecter une température des gaz d'échappement ;
dans lequel le dispositif de commande de régénération (41) est adapté pour démarrer le fonctionnement du moyen d'assistance d'augmentation de température (30, S40) quand le levier de verrouillage de porte (5) est à la seconde position (B) et que le dispositif de détection de température d'échappement (37) détecte une température plus basse qu'une valeur seuil pendant le fonctionnement du dispositif de régénération (33, 39).
